# FASCICULE DE BREVET EUROPEEN

(11) **EP 3 102 864 B1**
(45) Date de publication et mention de la délivrance du brevet: **25.04.2018**
(21) Numéro de dépôt: 15714550.9
(22) Date de dépôt: 04.02.2015
(51) Int. Cl.: F16L 27/08

(54) **JOINT TOURNANT A JOINTS D'ÉTANCHÉITÉ PRESSURISES**
DREHGELENK MIT DRUCKDICHTUNGSRINGEN
ROTATING JOINT COMPRISING PRESSURISED SEALING RINGS

(30) Priorité: 04.02.2014 FR 1450868
(43) Date de publication de la demande: 14.12.2016
(73) Titulaire: O.S.C Offshore Systems Concepts, 13600 La Ciotat (FR)
(72) Inventeur: PERRATONE, René, F-06500 Menton (FR)
(74) Mandataire: Brun, Philippe Alexandre Georges
(86) Numéro de dépôt international: PCT/FR2015/050271
(87) Numéro de publication internationale: WO 2015/118265

(56) Documents cités:
- GB-A- 1 312 199
- US-A- 5 169 181
- US-A- 6 161 834

## Description

L'invention concerne le domaine des joints tournants. Appelés également raccords rotatifs, ces derniers sont utilisés pour tout type d'usage et préférentiellement mais non limitativement dans les plateformes du domaine de l'offshore. Une plateforme pétrolière est une unité permettant l'exploitation de champs d'hydrocarbures en mer, c'est-à-dire d'extraire, produire ou stocker le pétrole et/ou d'autres gaz, tels que, à titre d'exemples non limitatifs, les hydrocarbures, lesdits produits étant situés en haute mer à des profondeurs parfois très importantes.

Il existe deux types de plateformes d'exploitation de gisement d'hydrocarbures et/ ou gaz en mer :
- tout d'abord, des plateformes fixes qui s'appuient sur les fonds marins et peuvent ainsi être reliées de façon rigide à des têtes de puits pétroliers et à des canalisations subaquatiques (ou « *pipelines* ») ;
- ensuite, des unités flottants de production, de stockage et de déchargement (généralement connus sous l'appellation anglo-saxonne « *Floating Production Storage and Offloading* », ci-après désignées FPSO).

A titre d'exemple préféré mais non limitatif, un joint tournant sera considéré dans son application au sein d'une unité flottante de production, de stockage et de déchargement.

Une telle unité flottante se présente généralement sous la forme d'un navire amarré au fond de la mer par un système, permanent ou amovible, permettant, en fonction des conditions environnementales, la rotation de supports flottants autour du point central d'amarrage, en principe une tourelle d'amarrage.

Sur lesdits supports flottants, différents équipements sont présents et permettent :
- de traiter les hydrocarbures venant d'un réservoir sous-marin et de séparer le pétrole des autres composants tels que, à titre d'exemples non limitatifs, les gaz, l'eau et le sable ;
- de stocker le pétrole et/ou autres gaz au préalable, afin de pouvoir, par la suite, les exporter en utilisant des bateaux navettes (également connus sous l'appellation anglo-saxonne « *Shuttle tanker* ») ;
- de réinjecter dans le réservoir l'eau et/ou le gaz extraits du pétrole et/ou autres gaz, qui ne peuvent pas être stockés sur la plateforme ;
- d'injecter dans des têtes de puits pétroliers des produits chimiques servant à protéger lesdits puits contre des phénomènes de corrosion et la formation de différents sous-produits susceptibles de perturber le fonctionnement desdits puits ;
- de commander au moyen de commandes hydrauliques et/ou électriques des installations sous-marines.

La tourelle d'amarrage est connectée au support flottant par un système de roulement, ledit système de roulement permettant au navire de pivoter autour de la partie géostatiquement fixée de la tourelle, ladite tourelle étant attachée au système d'ancrage. Une tourelle peut avantageusement être localisée à l'intérieur ou à l'extérieur du navire, sa position dépendant principalement de la structure de la coque et du nombre de lignes flexibles connectées à la tourelle.

En outre, sur la partie fixe du système d'amarrage, un système de transfert de fluide permet le raccordement des canalisations subaquatiques à l'unité flottante de production. En effet, au sein de la tourelle, un joint tournant ou un assemblage de joints tournants (également connus sous les appellations anglo-saxonnes « *swivel* » ou « *swivel stack* ») permet de définir un transfert de fluide entre la partie géostatique et le système libre du vaisseau qui tourne autour de la tourelle.

Ainsi des joints tournants assurent que tous les fluides, qu'ils soient gazeux ou liquides, soient transférés en toute sécurité des parties géostatiques, telles que, à titre d'exemples non limitatifs, des puits de pétrole, des conduites immergées en fond marin, des collecteurs, des flexibles, au système permettant les mouvements. On distingue deux types principaux de joints tournants :
- les joints tournants tubulaires (également connus sous les appellations anglo-saxonnes « pipe *swivel* » et « *in-line swivel* »)
- les joints tournants toroïdaux (également connus sous l'appellation anglo-saxonne « *toroidal swivel* »).

Les joints tournants tubulaires sont les plus simples systèmes de transfert de fluide. Ils incluent un unique passage de fluide. Lorsque plus d'un passage de fluide est nécessaire, les joints tournants toroïdaux sont utilisés : du fait de leur large diamètre, il est possible de prévoir un grand nombre de passages de fluide en empilant et/ou assemblant plusieurs joints tournants toroïdaux.

Un exemple de joint tournant toroïdal « classique » comporte un certain nombre de composants principaux. Un tel joint d'étanchéité est notamment décrit dans le document US 6161834. Il comprend un membre mâle, également désigné sous la dénomination « membre interne » et un membre femelle, également désigné sous la dénomination « membre externe », mobiles l'un par rapport à l'autre et maintenus concentriques et coaxiales à l'aide d'une roulement mécanique, à titre d'exemple non limitatif un roulement à trois rouleaux (connus également sous l'appellation anglo-saxonne « *3-race roiller bearing* »). En principe, le roulement mécanique permet le positionnement, la transmission des efforts et la rotation entre les membres mâle et femelle par le remplacement du glissement en un roulement. En effet, la puissance absorbée par la résistance au roulement est beaucoup plus faible que la puissance absorbée par la résistance au glissement. Le choix d'un roulement particulier s'effectue en fonction des dimensions et des charges que ledit roulement doit supporter. Un roulement est généralement composé de deux bagues, l'une intérieure et l'autre extérieure, avec des chemins de roulement intégrés. Des éléments roulants sont disposés entre les bagues au niveau des pistes. Les éléments roulants sont, selon le cas, des billes, des rouleaux cylindriques, des aiguilles, des rouleaux coniques ou sphériques. Une cage guide, en général, les éléments roulants, les garde à égale distance et évite le contact entre ceux-ci. On distingue ainsi quatre types principaux de roulements :
- les roulements à billes ;
- les roulements à rouleaux coniques ;
- les roulements à rouleaux cylindriques ;
- les roulements à aiguilles.

En général, un roulement à trois rouleaux est utilisé dans les joints tournants. Un tel roulement possède trois rangées de rouleaux pour évoluer dans deux direction : deux rangées de rouleaux radiaux et une rangée de rouleaux axiaux.

Une chambre toroïdale est formée entre les membres mâle et femelle, constituant une enceinte fermée. C'est par cette chambre que s'effectue le transfert de fluide. Une pluralité de chambres peut être présente au sein d'un même joint tournant pour assurer le passage ou transfert d'un ou plusieurs fluides.

Pour assurer l'étanchéité au sein d'un joint tournant, un ou plusieurs joints d'étanchéité peuvent être disposés de chaque côté de la chambre toroïdale, permettant la formation d'un passage de fluide étroit. Les joints d'étanchéités prennent place respectivement au sein de gorges prévues à cet effet. Les gorges peuvent avantageusement mais non limitativement résulter d'évidements toriques débouchants, aménagés en surface dans la paroi interne de l'une ou l'autre des membres mâle et femelle. Lesdits évidements peuvent être usinés ou obtenus directement par moulage du membre femelle ou mâle du joint tournant. En principe, tout type de joint d'étanchéité de forme annulaire peut être utilisé pour assurer l'étanchéité au sein du joint tournant. L'étanchéité que l'on cherche à garantir est une étanchéité dynamique, puisque les deux membres mâle et femelle sont en rotation relative l'un par rapport à l'autre. A titres d'exemples non limitatifs, les joints d'étanchéité utilisés peuvent être : des joints toriques (également connus sous l'appellation anglo-saxonne « *O-Ring* ») et des joints à lèvres (également connus sous l'appellation anglo-saxonne « *Lip Seal* »), profilé en U avec une ou plusieurs lèvres flexibles. En outre, un joint d'étanchéité est avantageusement fabriqué en un matériau compatible avec le ou les fluides à étancher transférés, résistant à des jeux anti-extrusion. De manière avantageuse mais non limitative, le joint d'étanchéité peut être fabriqué en élastomère de synthèse tel que le polytétrafluoroéthylène (PTFE) ou des silicones.

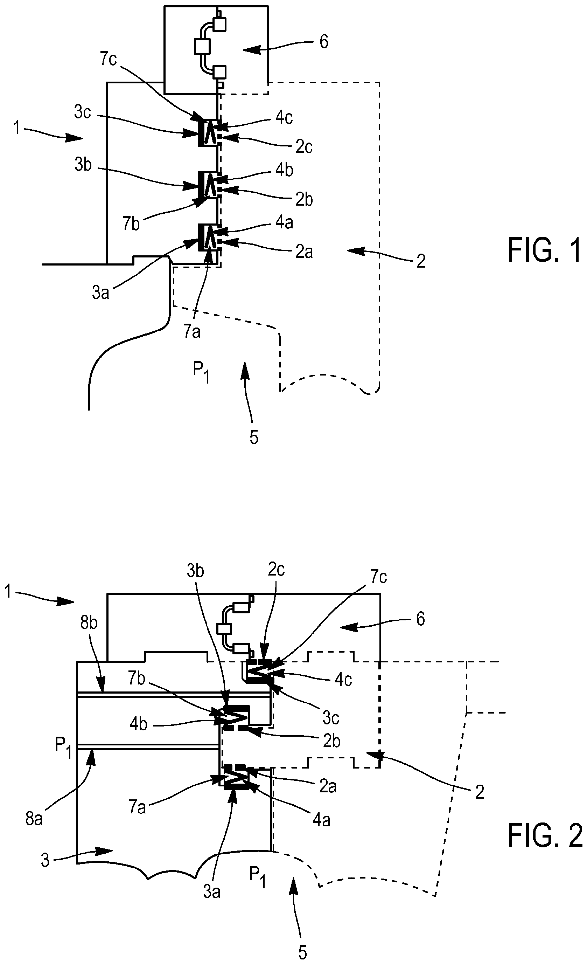

Notamment dans le domaine de l'offshore, la conception des joints tournants est bien souvent soumise à des exigences de haute pression et de haute température. Parfois, la taille importante du dispositif peut également avoir un impact sur la conception d'un joint tournant. Dans la pratique courante du domaine de l'offshore, deux types de joints tournants toroïdaux sont généralement utilisés : le joint tournant toroïdal à étanchéité piston et le joint tournant toroïdal à étanchéité face. Ils seront décrits en liaison avec les figures 1 et 2.

La figure 1 présente un premier mode de réalisation connu d'un joint tournant toroïdal à étanchéité piston (également connu sous l'appellation anglo-saxonne *« Piston Seal Swivel* »). Il s'agit du mode de réalisation le plus simple et le plus classique.

Un joint tournant 1 comporte un membre mâle 2 et un membre femelle 3, maintenus concentriques à l'aide d'un roulement mécanique 6 particulier, un roulement à trois rouleaux cylindriques. Les membres mâle 2 et femelle 3 sont mobiles l'un par rapport à l'autre. Ledit roulement 6, positionné au-dessus des membres mâle 2 et femelle 3, possède de nombreux avantages : il possède une grande résistance aux chocs, il supporte des charges radiales très importantes et il convient pour des grandes fréquences de rotations. Une chambre toroïdale 5, pour garantir le transfert d'un fluide, est formée entre les membres mâle 2 et femelle 3, respectivement les membres fixe et rotatif. Afin d'assurer l'étanchéité de la chambre toroïdale 5, trois joints d'étanchéité 4a, 4b et 4c sont présents : ils sont avantageusement installés au sein de gorges, plus précisément d'évidements 7a, 7b et 7c aménagés sur la paroi interne dans le membre femelle 3. En variante, les évidements peuvent être placés au sein du membre mâle 2. Les évidements sont, de manière avantageuse mais non limitative, pratiqués par usinage au moyen d'une machine-outil à l'aide d'un procédé d'alésage, fraisage, ou obtenus par moulage du membre femelle 3. Les joints d'étanchéité 4a, 4b et 4c sont préférentiellement, mais non limitativement, des joints toriques ou des joints annulaires à double lèvres, profilés en U. Lesdits joints comportent un talon coopérant avec deux lèvres flexibles. Dans ce premier mode de réalisation particulier, les lèvres du joint d'étanchéité 4a, 4b et 4c sont saillantes parallèlement à l'axe de révolution dudit joint d'étanchéité. Le joint d'étanchéité 4a, 4b et 4c garantit l'étanchéité de la manière suivante : les deux lèvres maintiennent le contact du joint d'étanchéité 4a, 4b et 4c avec l'évidement 7a, 7b et 7c qui hébergent ledit joint d'étanchéité, définissant la surface à étancher, et assurent ainsi l'étanchéité. Les lèvres suivent le profil et la forme de l'évidement du joint tournant 1. Le talon permet la coopération et le maintien des lèvres avec le reste du joint d'étanchéité : ledit talon et les lèvres constituent une seule et même entité. L'étanchéité est assurée grâce aux lèvres, chaque lèvre maintenant respectivement le contact sur une surface 2a, 2b ou 2c du membre mâle fixe 2 et sur une surface 3a, 3b ou 3c du membre femelle rotatif 3. De manière analogue, lorsque le joint d'étanchéité est un joint torique, l'étanchéité est assurée par ledit joint sur deux surfaces de contact : l'une 2a, 2b ou 2c sur le membre mâle fixe 2 et l'autre 3a, 3b ou 3c sur le membre femelle rotatif 3.

Néanmoins, cette configuration présente un certain nombre d'inconvénients. Au cours du temps, les joints d'étanchéité, quel que soit leur type, sont soumis à deux classes de déformations liées : l'extrusion et le fluage. Le fluage peut se définir comme une déformation lente et retardée d'un corps soumis à une contrainte constante, provoquée par la durée d'application de cette contrainte. Dans un joint tournant, les joints d'étanchéité sont soumis au mouvement répété qu'est la rotation, qui correspond à ladite contrainte constante, et entraine, au cours du temps, une déformation desdits joints d'étanchéité. Dans un montage standard, le jeu d'extrusion du joint d'étanchéité augmente avec la pression et avec le diamètre du joint d'étanchéité. En outre, dans le cadre de la prévention d'une défaillance du joint d'étanchéité à cause du phénomène d'extrusion, plus la pression est grande, plus le jeu d'extrusion admissible par le joint d'étanchéité est petit. De ce fait, la mise en oeuvre de ce premier mode de réalisation n'est plus appropriée lorsque la pression du dispositif et/ou le diamètre du joint tournant augmentent. De plus, l'étanchéité au sein du joint tournant est assurée par le contact de chaque lèvre du joint d'étanchéité sur une surface des membres mâle et femelle du joint tournant. Les deux membres mâle et femelle étant en rotation relative l'une par rapport à l'autre, le joint d'étanchéité subit un phénomène de cisaillement, pouvant entrainer une défaillance du joint d'étanchéité dans son rôle.

La figure 2 présente un deuxième mode de réalisation connu d'un joint tournant toroïdal à étanchéité face (également connu sous l'appellation anglo-saxonne « *Face Seal Swivel* »).

Comme dans le premier mode de réalisation décrit précédemment, un joint tournant 1 comporte un membre mâle 2 et un membre femelle 3, maintenus concentriques à l'aide d'un roulement mécanique 6 particulier, un roulement à trois rouleaux cylindriques. Les membres mâle 2 et femelle 3 sont mobiles l'un par rapport à l'autre. Ledit roulement 6, positionné au-dessus des membres mâle 2 et femelle 3, possède de nombreux avantages : il possède une grande résistance aux chocs, il supporte des charges radiales très importantes et il convient pour des grandes fréquences de rotations. Une chambre toroïdale 5 est formée entre les membres mâle 2 et femelle 3, respectivement les membres rotatif et fixe.

Afin d'assurer l'étanchéité de la chambre toroïdale 5, trois joints d'étanchéité 4a, 4b et 4c sont présents : dans ce mode de réalisation particulier, comme précédemment, lesdits joints d'étanchéité 4a, 4b, 4c sont avantageusement positionnés ou installés au sein de gorges, plus précisément d'évidements 7a, 7b et 7c pratiqués dans la membre femelle 3. Les évidements 7a, 7b et 7c sont de manière avantageuse mais non limitative, pratiqués par usinage au moyen d'une machine-outil à l'aide d'un procédé d'alésage, fraisage ou obtenus par moulage de l'évidement directement sur le membre femelle 3. Les membres femelle 3 et mâle 2 ont cependant une forme particulière adaptée pour éviter toute déformation des joints d'étanchéité 4a, 4b et 4c du fait de jeux mécaniques axiaux. En effet, une ou plusieurs protubérances annulaires sont présentes sur le membre mâle 2. La ou lesdites protubérances sont insérées dans une ou des gorges aménagées dans le membre femelle 3 pour accueillir ledit membre mâle. Les évidements 7a, 7b et 7c pour accueillir les joints d'étanchéité 4a, 4b et 4c sont avantageusement agencés sur la paroi interne du membre femelle au sein de l'espace prévu pour accueillir la ou les protubérances. En outre, les joints d'étanchéité 4a, 4b et 4c sont préférentiellement mais non limitativement des joints toriques ou des joints annulaires à double lèvres, profilés en U, lesdits joints comportant un talon coopérant avec deux lèvres flexibles. Dans ce deuxième mode de réalisation particulier, les lèvres du joint d'étanchéité sont saillantes dans un plan normal à l'axe de révolution dudit joint d'étanchéité. Le joint d'étanchéité garantit l'étanchéité de la manière suivante : les deux lèvres maintiennent le contact du joint d'étanchéité avec l'évidement, définissant la surface à étancher, et assurent ainsi l'étanchéité. Les lèvres suivent le profil et la forme de l'évidement du joint tournant. Le talon permet la coopération et le maintien des lèvres avec le reste du joint d'étanchéité : ledit talon et les lèvres constituent une seule et même entité. L'étanchéité est assurée grâce aux lèvres, chaque lèvre maintenant respectivement le contact sur une surface 2a, 2b ou 2c du membre mâle rotative 2 et sur une surface 3a, 3b ou 3c du membre femelle fixe 3. De façon analogue, lorsque le joint d'étanchéité est un joint torique, l'étanchéité est assurée par ledit joint sur deux surfaces de contact : l'une 2a, 2b ou 2c sur le membre mâle fixe 2 et l'autre 3a, 3b ou 3c sur le membre femelle rotatif 3.

Ce deuxième mode de réalisation permet une variation minimale du jeu d'extrusion. Il est par conséquent nécessaire de trouver un bon équilibre entre les membres mâle et femelle sous pression pour limiter les déformations axiales des joints d'étanchéité. De ce fait, la configuration du joint requiert un design particulier, notamment la présence de protubérances annulaires comme décrit précédemment, afin d'assurer un équilibre optimal : ce design demande en conséquence un haut niveau d'ingénierie et entraine ainsi une fabrication et un assemblage complexes, voire parfois même problématiques. En outre, dans ce deuxième mode de réalisation, le jeu d'extrusion et de fluage sont différents dans chaque joint d'étanchéité. En effet, les dispositifs tels que les joints tournants, ont des tolérances mécaniques différentes selon que le joint d'étanchéité est placé en haut ou en bas du dispositif. Les variations des tolérances sont à prendre en compte dans la conception du joint tournant, ce qui engendre bien souvent une augmentation des coûts d'un tel joint tournant. Par conséquent, un joint tournant selon le deuxième mode de réalisation est en principe utilisé pour des larges diamètres et sous haute pression.

En outre, un joint tournant 1 conforme à la deuxième configuration est souvent associé à un système de barrière d'huile. Ce système repose sur le principe suivant : une barrière d'huile est créée artificiellement entre deux ou plusieurs joints d'étanchéité afin d'empêcher toute fuite du fluide transféré dans le joint tournant. Les évidements 7a, 7b et 7c où prennent place les joints d'étanchéité 4a, 4b et 4c sont remplis à l'aide d'un fluide d'isolation au moyen de deux conduits 8a et 8b : ledit fluide d'isolation est placé à une pression P₁ supérieure à celle du fluide transféré à étancher assurant ainsi un meilleur contact entre le joint d'étanchéité et les deux surfaces de contact de l'évidement. On vise ainsi à empêcher tout fuite du fluide transféré. Néanmoins, par sécurité, le fluide d'isolation est choisi tel qu'il soit compatible avec le fluide à étancher, de sorte que si une fuite du fluide transféré venait à survenir, le fluide d'isolation ne polluerait pas le fluide transféré. Dans l'exemple proposé, trois joints d'étanchéité sont arrangés de chaque côté de la chambre toroïdale de la manière suivante : le joint d'étanchéité principal 4b et le joint d'étanchéité secondaire 4c sont orientés dans la direction de la chambre toroïdale, tandis que le joint d'étanchéité d'isolation 4a a une orientation en direction inverse. Les évidements où sont logés les joints d'étanchéité principal 4b et d'isolation 4a sont remplis par le fluide d'isolation. Si une défaillance du joint d'étanchéité survenait, telle que, à titre d'exemple non limitatif, une fuite du fluide d'isolation, le joint d'étanchéité secondaire 4c permettrait au joint d'étanchéité de fonctionner jusqu'à ce qu'une réparation soit réalisée.

Bien que ces deux modes de réalisation aient été largement utilisés pendant un certain nombre d'années, il présente un certain nombre d'inconvénients, qui ont des conséquences importantes sur le joint d'étanchéité.

Tout d'abord, le roulement à trois rouleaux cylindriques pose quelques problèmes. Pour rappel, le roulement à trois rouleaux cylindriques est utilisé pour maintenir les membres mâle et femelle concentriques. Lorsqu'une pression est appliquée, les deux membres mâle et femelle se déforment : le jeu radial au sein du roulement augmente considérablement. Lorsque des charges extérieures, provenant par exemple des conduites, agissent sur le membre femelle, toutes les augmentations de jeux se cumulent sur un seul côté du membre femelle. Ainsi, des déformations radiales seront présentes, entrainant un fluage radial important dû à la pression interne. Par conséquent, les membres mâle et femelle ne peuvent être maintenus concentriques, ce qui requiert une variation dans les dimensions de l'évidement du joint d'étanchéité.

Dans les deux modes de réalisation des joints tournants, chaque joint d'étanchéité est positionné dans un évidement localisé dans le membre femelle et tourne sur une surface du membre mâle. L'étanchéité est donc créée sur deux surfaces de contact respectivement une surface sur chaque membre mâle ou femelle. Ce type de configuration créée sur le talon dudit joint d'étanchéité les contraintes suivantes :
- une tension circonférentielle, due à la déformation du joint tournant sous pression ;
- une tension ou compression du talon selon une direction radiale, du fait de la variation de taille de l'évidement ;
- dans le cadre des joints à double lèvres, la friction de la première lèvre sur le membre femelle et la friction de la deuxième lèvre sur le membre mâle créent un cisaillement circonférentielle du fait des mouvements oscillatoires. De façon analogue, le même effet de cisaillement peut se produire sur un joint torique.
L'ajout de toutes ces contraintes peut entrainer des dégâts irréversibles sur le joint d'étanchéité, qui, avec le temps, peuvent entrainer la rupture ou le défaut du joint d'étanchéité.

L'invention permet de répondre à tout ou partie des inconvénients soulevés par les solutions connues.

Parmi les nombreux avantages apportés par un joint tournant selon l'invention, nous pouvons mentionner que celui-ci permet :
- de réduire les coûts et le temps passé pour la conception des joints tournants ;
- de simplifier la fabrication des joints tournants ;
- d'améliorer les systèmes d'étanchéité au sein du joint tournant et en conséquence d'assurer une meilleure fiabilité de transfert des fluides ;
- de diminuer les contraintes de cisaillement ou de couple de rotation imposées par les montages connus de joints tournants et ainsi d'allonger la durée de vie des joints d'étanchéité utilisés dans les joints tournants ;
- d'ajuster la pression au sein du joint tournant aux vues des besoins ressentis dépendant des fluides ;
- d'allonger la durée de vie des joints tournants quel que soit le fluide transféré.

A cette fin, il est notamment prévu un joint tournant pour transférer un premier fluide comprenant :
- un membre mâle et un membre femelle montés mobiles l'un par rapport à l'autre ;
- un roulement mécanique pour maintenir les membres mâle et femelle concentriques ;
- un joint d'étanchéité annulaire ;
- le membre femelle étant un élément sensiblement cylindrique creux dont la paroi interne comporte un premier évidement annulaire débouchant sur toute la circonférence de la paroi interne dudit membre femelle, ledit premier évidement étant agencé pour accueillir le joint d'étanchéité.
Après montage du joint d'étanchéité dans le premier évidement, pour diminuer les contraintes de cisaillement sur le joint d'étanchéité et optimiser la durée de vie des joints d'étanchéité et en conséquence des joints tournants, le joint d'étanchéité présente une surface de contact supérieure et une surface de contact inférieure avec ledit premier évidement, lesdites surfaces de contact étant sensiblement normales à l'axe de révolution et coopérant uniquement avec le premier évidement.

De manière avantageuse, pour assurer l'étanchéité et pour éviter la propagation du premier fluide à l'extérieur du joint tournant en cas de défection du joint d'étanchéité, le joint tournant peut comporter en outre des moyens pour acheminer un deuxième fluide sous pression, à une pression P₂ supérieure de celle P₁ du premier fluide transféré, audit premier évidement.

Préférentiellement, les moyens pour acheminer le deuxième fluide peuvent consister en un ou plusieurs conduits radiaux dans le membre femelle débouchant dans le premier évidement.

Afin de ne pas polluer le premier fluide transféré en cas de fuite du joint d'étanchéité, le deuxième fluide peut être compatible avec le premier fluide.

Selon un mode de réalisation préféré, le joint d'étanchéité peut être torique.

En variante, selon un autre mode de réalisation préféré, le joint d'étanchéité d'un joint tournant conforme à l'invention peut présenter une section en U et comporter deux lèvres flexibles inférieure et supérieure coopérant avec un talon, lesdites lèvres inférieure et supérieure du joint étant saillantes dans un plan normal à l'axe de révolution dudit joint d'étanchéité et constituant les surfaces de contact inférieure et supérieure du joint d'étanchéité.

En outre, pour diminuer les contraintes de cisaillement et assurer une étanchéité la plus fiable possible, la profondeur du premier évidement est supérieure ou égale à la distance définie entre le diamètre interne et le diamètre externe du joint d'étanchéité.

En variante ou en complément, le joint tournant peut comporter en outre un deuxième évidement coaxial et contenu dans un plan sensiblement parallèle et non confondu avec celui du premier évidement.

De manière avantageuse, pour assurer l'étanchéité et pour éviter la propagation du premier fluide à l'extérieur du joint tournant en cas de défection du joint d'étanchéité, le joint tournant peut comporter des moyens pour acheminer un troisième fluide sous pression à une pression P₃ au deuxième évidement.

Préférentiellement, les moyens pour acheminer le troisième fluide peuvent consister en un ou plusieurs conduits radiaux dans le membre femelle débouchant dans le deuxième évidement.

Pour garantir un transfert de fluide, les membres mâle et femelle du joint tournant peuvent être agencés mutuellement pour matérialiser une chambre toroïdale au sein de laquelle transite le premier fluide à une pression P₁, ledit premier évidement étant positionné entre la chambre toroïdale et le deuxième évidement.

Avantageusement, pour étancher de grosses pressions en utilisant des joints conçus pour de plus faibles pressions et ainsi diminuer les problèmes d'extrusion relatif aux joints d'étanchéité, le joint tournant peut comporter un conduit radial additionnel placé entre les premier et deuxième évidements débouchant dans la paroi interne du membre femelle pour acheminer un quatrième fluide à une pression Pᵢ, telle que la pression P₂ du deuxième fluide est égale à la pression de la chambre P₁ augmentée d'un différentiel de pression déterminé strictement positif et la pression P₃ du troisième fluide est égale à la pression Pᵢ du quatrième fluide augmentée du même différentiel de pression déterminé strictement positif.

En variante, les pressions respectives P₂ et P₃ des deuxième et troisième fluides sont supérieures à la pression du premier fluide transféré.

De manière préférée, afin d'éviter des déformations radiales inhérentes au roulement mécanique, le roulement mécanique est un roulement à rouleaux croisés.

Selon un deuxième objet, l'invention concerne un système de transfert de fluide (également connu sous l'appellation anglo-saxonne « *Swivel Stack* »), comportant un ou plusieurs joints tournants. Pour optimiser le transfert de fluide en toute sécurité et en toute fiabilité, ledit système de transfert de fluide comporte au moins un joint tournant conforme à l'invention.

D'autres caractéristiques et avantages apparaîtront plus clairement à la lecture de la description qui suit et à l'examen des figures qui l'accompagnent parmi lesquelles :
- la figure 1, précédemment décrite, illustre une vue détaillée d'un premier mode de réalisation connu d'un joint tournant toroïdal à étanchéité piston (également connu sous l'appellation anglo-saxonne « *Piston Seal Swivel* ») ;
- la figure 2, précédemment décrite, présente une description graphique d'un deuxième mode de réalisation connu d'un joint tournant toroïdal à étanchéité face (également connu sous l'appellation anglo-saxonne « *Face Seal Swivel* »);

- les figures 3a et 3b décrivent deux vues en coupe d'un joint tournant 1 conforme à l'invention ;
- la figure 4 illustre une variante d'application du joint tournant 1 conforme à l'invention dans son utilisation au sein d'un système de transfert de fluide.

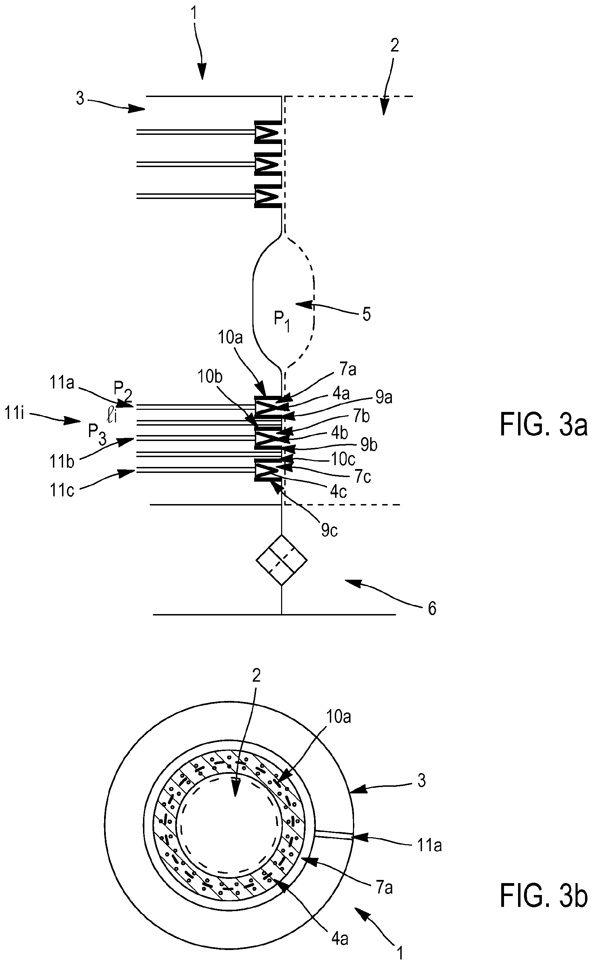

Les figures 3a et 3b décrivent deux vues en coupe d'un joint tournant 1 conforme à l'invention.

Un joint tournant 1 conforme à l'invention est un joint du type toroïdal. Un tel joint tournant 1 comporte deux membres, l'un interne mâle 2 et l'autre externe femelle 3, mobiles l'un par rapport à l'autre. Un roulement mécanique 6 est présent dans le joint tournant pour maintenir les membres mâle 2 et femelle 3 concentriques et assurer un jeu mécanique minimal. De manière avantageuse, le roulement mécanique 6 peut être un roulement à rouleaux croisés. Grâce à la disposition en « X » des éléments roulants, les roulements à rouleaux croisés conviennent pour les applications à charges radiales, à charges axiales dans les deux sens, à couples de renversement ou bien à toutes combinaisons de charges. Ces roulements se caractérisent en outre par une précision élevée, une grande rigidité, un encombrement minimum et un montage aisé. Un roulement à rouleaux croisés se compose de deux jeux de bagues et de rouleaux montés perpendiculairement l'un par rapport à l'autre et alternativement dans une direction ou une autre. Une fois assemblé, ce roulement à deux rangées présente une hauteur totale à peine plus élevée que celle d'un roulement à une rangée. Utiliser un roulement à rouleaux croisés à la place d'un roulement à trois rangées de rouleaux permet avantageusement de maintenir les membres mâle 2 et femelle 3 concentriques, quelles que soient les déformations radiales subies par les membres.

Un joint tournant a pour rôle d'assurer le transfert d'un fluide. De ce fait, il doit posséder un ou plusieurs organes assurant une fonction d'étanchéité, c'est-à-dire un organe qui empêche le passage d'un fluide d'une première enceinte à une deuxième enceinte voisine. L'étanchéité garantie est une étanchéité dynamique puisque les membres mâle 2 et femelle 3 sont en rotation relative l'un par rapport à l'autre. Un joint tournant 1 conforme à l'invention comprend un ou plusieurs joints d'étanchéité 4a, 4b et 4c annulaires, pouvant être adaptés aux dimensions requises par le joint tournant 1. Les joints d'étanchéité 4a, 4b et 4c se montent dans le joint tournant 1 au sein d'évidements annulaires 7a, 7b et 7c aménagés dans le membre femelle 3. Lesdits évidements 7a, 7b et 7c sont avantageusement obtenus par moulage ou usinés débouchant sur toute la circonférence de la paroi interne de dudit membre femelle 3 formant ainsi des gorges. En outre, ils sont coaxiaux et alignés selon des plans sensiblement parallèles et non confondus. Chaque évidement 7a, 7b et 7c héberge un unique joint d'étanchéité 4a, 4b et 4c. Les évidements peuvent être de différentes formes : ils peuvent être adaptés à la forme du joint et présenter des sections sensiblement semi-circulaires en « C » ou angulaires en « **Π** ». Un évidement de forme en « C » est particulièrement avantageux pour héberger un joint torique de section en O ; un évidement de forme en « **Π** » est davantage adapté à un joint à lèvres. En pratique, les évidements en « **Π** » sont difficiles à usiner : avantageusement, des évidements en « ∩ » particulièrement adaptés pour les joints à lèvres, seront préférés.

De manière avantageuse, le ou les joints d'étanchéité 4a, 4b ou 4c peuvent être toriques. Les joints toriques sont considérés comme particulièrement adaptés pour leurs applications dans les joints tournants puisqu'ils assurent une étanchéité pour une large gamme de pression, de température et de tolérance. Ce sont des éléments d'étanchéité efficace et économique qui permettent un large éventail d'applications statiques ou dynamiques, puisque leurs faibles encombrements assurent des assemblages de dimensions réduites, leurs montages faciles réduisent les risques et augmentent leur fiabilité, tandis que le large choix de matériaux de fabrication qu'ils offrent permet une compatibilité avec la plupart des fluides. On entend par compatible, tout matériau inerte chimiquement avec la plupart des fluides, étant capable de garantir toute absence de réaction chimique entre le matériau et le fluide à étancher, malgré des changements de température et de pression. A titre d'exemple non limitatif, le matériau constituant le ou les joints toriques peut être un caoutchouc «nitrile», silicone, un polyuréthane ou un élastomère fluoré. Une des limites de ce type de joint est qu'ils ne peuvent pas être employés à de très grandes vitesses. En outre, avantageusement, le ou les joints d'étanchéité 4a, 4b et 4c peuvent avoir leurs diamètres internes correspondant au diamètre externe du membre mâle.

En variante ou en complément, le ou les joints d'étanchéité 4a, 4b et 4c peuvent être des joints à lèvres flexibles. Des joints à profil en U alliant un ou plusieurs types de matériaux sont utilisés : les matériaux les plus employés sont des élastomères de synthèse, par exemple, de manière non limitative, le nitrile (butadiène acrylo-nitrile), un élastomère fluorocarboné comme le polytétrafluoroéthylène (ci-après désigné PTFE), les polyacrylates ou silicones. Un tel joint d'étanchéité est constitué généralement d'au moins deux lèvres flexibles coopérant avec un talon pour former une seule et même entité, ledit talon permettant le maintien des lèvres avec le reste du joint d'étanchéité. Afin d'assurer une étanchéité plus fiable, selon le matériau employé, le joint d'étanchéité peut avantageusement comporter un ressort, préférentiellement plat, pour procurer la force radiale au niveau des deux lèvres nécessaire pour assurer l'étanchéité. Habituellement, les joints d'étanchéité sont fabriqués en PTFE chargé avec des additifs afin d'augmenter leur résistance à l'usure et à l'extrusion. Néanmoins, le PTFE a une tendance à fluer dans le temps sous pression, c'est-à-dire qu'après un certain temps dans la même position sous l'application d'une certaine pression, le talon du joint d'étanchéité aura les dimensions de l'évidement et le matériau sera par conséquent extrudé. Pour travailler sous haute pression, comme c'est le cas dans les joints tournants, une bague anti-extrusion dans un matériau plus résistant tel que le polyétheréthercétone (PEEK) ou le polyamide-imide (PAI) peut être ajouté au talon pour éviter ce phénomène d'extrusion.

En outre, l'étanchéité dynamique est assurée par la coopération unique, en conséquence le contact, du ou des joints d'étanchéité annulaires sur toute la circonférence du joint tournant 1 conforme à l'invention, à l'aide d'une surface de contact supérieure 10a, 10b et 10c et d'une surface de contact inférieure 9a, 9b et 9c du ou des joint d'étanchéités 4a, 4b et 4c et de la paroi interne du ou des évidements contenus dans le membre femelle rotatif 3. Les surfaces de contact supérieure 10a, 10b et 10c et inférieure 9a, 9b et 9c sont avantageusement normales au plan de révolution du joint tournant 1 pour épouser la forme du ou des évidements 7a, 7b et 7c. Ainsi, les surfaces de contact privilégiées du ou des joints d'étanchéité 4a, 4b et 4c tournent dans le ou les évidements 7a, 7b et 7c au sein d'un seul et même membre rotatif, le membre femelle 3, ce qui permet de supprimer les contraintes de cisaillement dans le joint d'étanchéité, et plus particulièrement dans le talon du joint d'étanchéité lorsque des joints à lèvres sont utilisés.

Un joint tournant 1 selon l'invention est employé pour assurer le transfert de fluide à une certaine pression en toute étanchéité, sécurité et fiabilité dans les eaux de mer. Le transfert d'un tel fluide se fait au travers d'une chambre toroïdale 5, constituée grâce à l'agencement mutuel des membres mâle 2 et femelle 3, mobiles l'un par rapport à l'autre. Ce premier fluide F₁ à une pression P₁ peut avantageusement être du pétrole et/ou d'autres gaz, tels que, à titre d'exemple non limitatif, les hydrocarbures. L'étanchéité est assurée par la présence de joints d'étanchéité 4a, 4b et 4c au sein du joint tournant 1. Néanmoins, ces joints tournants ne sont pas « infaillibles » : le mouvement de rotation des deux membres dont le jeu est à étancher et notamment la vitesse appliquée, l'utilisation de fluide sous de fortes pressions ne font qu'accélérer l'usure et l'extrusion desdits joints d'étanchéité, pouvant entrainer des fuites du premier fluide dans les eaux marines. Afin de remédier à ces inconvénients, le joint tournant 1 conforme à l'invention peut comporter des moyens pour appliquer une pression aux joints d'étanchéité. La pression permet d'appliquer une contrainte de compression sur le joint d'étanchéité, et plus particulièrement dans le cas de joints à lèvres avec bague anti-extrusion, dans le talon et dans la bague anti-extrusion. La contrainte de compression réduit le risque de fissures, optimise les contraintes d'usure du matériau durant la vie du joint d'étanchéité et maintient en conséquence la raideur du joint d'étanchéité sur le membre mâle fixe 2. Ces moyens pour appliquer une pression repose sur un système de barrière d'huile. Ce système suit le principe suivant, décrit précédemment : une barrière d'huile est créée artificiellement pour un ou plusieurs joints d'étanchéité afin d'empêcher toute fuite du fluide transféré dans le joint tournant 1. Pour chaque évidement 7a, 7b et 7c, un fluide est acheminé à l'évidement par un ou plusieurs conduits radiaux 11a, 11b et 11c présent dans le membre femelle et débouchant dans l'évidement 7a, 7b et 7c.

A titre d'exemple non limitatif, pour le premier évidement 7a, un deuxième fluide F₂, nommé communément « fluide d'isolation », peut être acheminé via un conduit radial 11a dans le membre femelle débouchant de la paroi interne de l'évidement 7a. En complément, d'autres conduits radiaux peuvent déboucher dans le premier évidement 7a. Ledit deuxième fluide F₂ est placé à une pression P₂ supérieure à celle P₁ du premier fluide F₁ transféré, assurant ainsi un meilleur contact entre les deux surfaces de contact supérieure 10a et inférieure 9a du joint d'étanchéité 4a et la paroi interne de l'évidement 7a. On vise ainsi à empêcher tout fuite du premier fluide F₁ transféré. Néanmoins, par sécurité, le deuxième fluide F₂ est choisi tel qu'il soit compatible avec le fluide à étancher, de sorte que si une fuite du premier fluide F₁ transféré venait à survenir, le deuxième fluide F₂ ne polluerait pas le premier fluide transféré. On entend par compatible, tout fluide inerte chimiquement avec le fluide transféré, c'est-à-dire que tout fluide compatible doit être capable de garantir toute absence de réaction chimique entre les premier et deuxième fluides, malgré des changements de température et de pression. A titre d'exemple non limitatif, lorsque le premier fluide F₁ est du pétrole, le deuxième fluide F₂ pour assurer la pressurisation, peut être une huile hydraulique, du glycol ou bien du méthanol. En outre, la pressurisation dudit deuxième fluide F₂ à la pression P₂ est assurée par un organe extérieur, une mini-centrale hydraulique (également connue sous l'appellation anglo-saxonne « *Hydraulic Power Pack* »), qui impose au fluide d'isolation une pression sous la forme d'une pompe en se basant sur le principe de la loi de Pascal. On a défini la pression P₂ du deuxième fluide F₂ comme supérieure à la pression P₁ du premier fluide F₁ : ainsi, la pression P₂ du deuxième fluide F₂ est égale à la pression P₁ du premier fluide augmentée d'un différentiel de pression déterminé strictement positif. Ledit différentiel de pression peut avantageusement correspondre à un pourcentage équivalent à une valeur comprise entre cinq et dix pourcent de la pression P₁ du premier fluide transféré. Le joint tournant 1 conforme à l'invention peut également comporter des moyens de mesure afin de vérifier que la pression P₂ du deuxième fluide est maintenue supérieure à la pression P₁ du fluide transféré. En complément ou en variante, ledit joint tournant 1 peut en outre comporter des moyens d'asservissement du fluide d'isolation afin d'obtenir une surpression fixe ou une surpression en fonction de la valeur de la pression P₁ du premier fluide transporté F₁.

De la même façon, afin d'assurer l'étanchéité du joint d'étanchéité secondaire 4b, pour le deuxième évidement 7b, un troisième fluide F₃, nommé aussi communément « fluide d'isolation », peut être acheminé via un conduit radial 11b dans le membre femelle débouchant de la paroi interne de l'évidement 7b. Comme précédemment, la pression P₃ du troisième fluide F₃ peut être supérieure à la pression P₁ du premier fluide F₁ : ainsi, la pression P₃ du troisième fluide F₃ est égale à la pression P₁ du premier fluide augmentée d'un différentiel de pression déterminé strictement positif. Ledit différentiel de pression peut correspondre à un pourcentage équivalent à une valeur comprise entre cinq et dix pourcent de la pression P₁ du premier fluide transféré. Lesdits deuxième et troisième fluides F₂ et F₃ peuvent consister en un même fluide d'isolation. Néanmoins, les pressions P₂ et P₃ des deuxième et troisième fluides, éventuellement différentes, seront déterminées strictement supérieures à la pression P₁ du fluide transféré.

En variante, pour permettre d'étancher des fluides soumis à de grosses pressions tout en utilisant des joints conçus pour de plus faibles pressions et ainsi optimiser le système au point de vue économique, par exemple en réduisant les coûts de fabrication du joint tournant, une succession de joints pressurisés à des pressions plus basses lorsque l'on s'éloigne de la chambre toroïdale peut être retenue. Ces pressions sont obtenues par l'application d'un quatrième fluide F₄, communément appelé « contre-fluide ». Le membre femelle 3 du joint tournant 1 peut comporter un conduit radial additionnel 11i débouchant de la paroi interne du membre femelle 3. Ledit conduit radial 11i est placé entre les premier et deuxième évidements 11a et 11b permettant l'acheminement du quatrième fluide Fᵢ. Les deuxième, troisième et quatrième fluides F₂, F₃ et Fᵢ peuvent avantageusement être un même fluide soumis à différentes pressions P₂, P₃ et Pᵢ formant ainsi un gradient de pression. De manière préférée, les différentes pressions P₂, P₃ et Pᵢ peuvent être avantageusement obtenues par l'emploi de différentes centrales hydrauliques assurant la pressurisation du fluide aux pressions voulues. Le gradient de pression peut être avantageusement défini de la façon suivante :
- appliquée au premier évidement 7a, comme décrit précédemment, la pression P₂ du deuxième fluide F₂ est égale à la pression de la chambre P₁, correspondant à la pression du premier fluide transféré, augmentée d'un différentiel de pression déterminé strictement positif ;
- appliquée à la paroi interne, la pression Pᵢ du quatrième fluide est égale à une pression prédéterminée inférieure à la pression P₁ résultant dans la chambre;
- appliquée au deuxième évidement 7b, la pression P₃ du troisième fluide F₃ est égale à la pression Pᵢ du quatrième fluide augmentée d'un différentiel de pression déterminé strictement positif.
Ledit différentiel de pression correspond à un pourcentage équivalent à une valeur comprise entre cinq et dix pourcent de la pression P₁ du premier fluide transféré, strictement positif.
La pression prédéterminée Pᵢ dépend aussi des caractéristiques du joint d'étanchéité utilisé dans l'évidement et non plus de la pression P₁ du premier fluide transféré. En effet, selon le type de joint d'étanchéité et suivant le type de matériau les constituant, ces derniers résistent plus ou moins bien aux hautes pressions : l'extrusion et le fluage peuvent apparaître plus ou moins rapidement ; de ce fait, il est nécessaire de trouver des alternatives pour éviter certains coûts de manutention et de réparation dans le cas où les joints d'étanchéité seraient défaillants. Diminuer la pression dans les joints d'étanchéité revient à ralentir les phénomènes d'extrusion des joints et ainsi rallonger leur durée d'utilisation. Selon cette variante, le coût total du joint tournant 1 selon l'invention est ainsi inférieur à celui des joints tournants existants sur le marché d'aujourd'hui.

Par ailleurs, un conduit radial additionnel (non représenté sur les figures) peut être avantageusement aménagé dans la partie inférieure du membre femelle 3 pour récupérer les fuites supplémentaires du premier fluide qui n'aurait pas été étanchées grâce au système.

Il pourrait être envisagé, de manière analogue, d'ajouter une pluralité d'évidements coopérant chacun avec un unique joint d'étanchéité si le besoin se fait sentir. En général, le dernier joint d'étanchéité 4c est utilisé comme système de sauvegarde ou de secours puisqu'il s'agit d'un joint d'étanchéité redondant au regard du joint d'étanchéité 4b : il ne sera pressurisé et utilisé comme joint d'étanchéité secondaire que dans le cas où un des autres joints d'étanchéité ne conférerait plus une parfaite étanchéité.

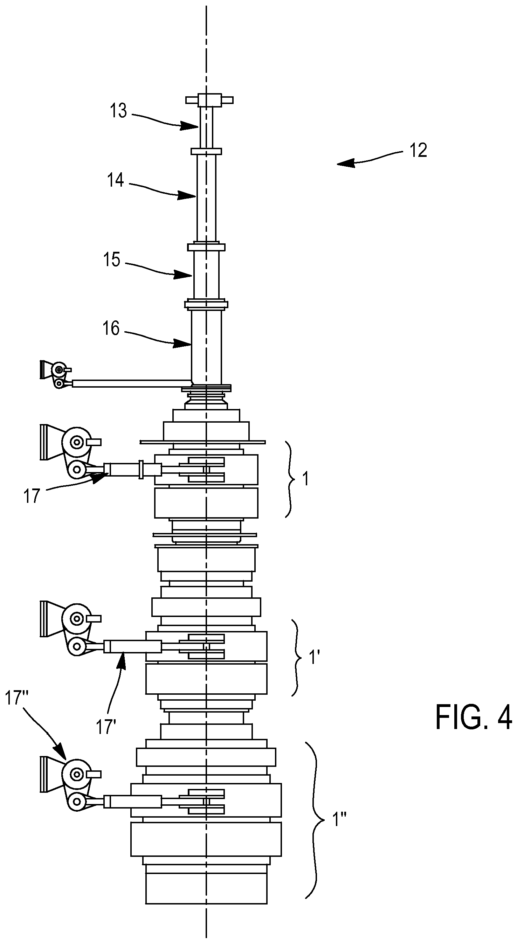

La figure 4 illustre une variante d'application du joint tournant 1 conforme à l'invention dans son utilisation au sein d'un système de transfert 12 de fluide. Le système de transfert de fluide (également connus sous l'appellation anglo-saxonne « *Swivel Stack* ») est constitué d'un assemblage de joints tournants 1, 1' et 1" selon l'invention. D'autres modules de joints tournants peuvent être utilisés pour permettre d'autres transferts. A titre d'exemples non limitatifs, on peut notamment citer :
- un connecteur rotatif optique 13 et un connecteur rotatif 14 (également connus sous l'appellation anglo-saxonne « *Optical Swivel »* et « *Electric Swivel* ») qui permettent les transferts de puissance et d'informations ;
- d'autres raccords rotatifs 15 et 16 (également connus sous l'appellation anglo-saxonne « Utility Swivel ») permettant le transfert de tous les produits et additifs nécessaires au transfert et au bon fonctionnement du système de transfert, tels que des agents chimiques, des agents hydrauliques, de l'air ou autre gaz, les eaux de lutte contre les incendies ou bien des évacuations ;
- des bras de réaction 17, 17' et 17" permettent d'assister le système de transfert de fluide 12 et assurent le maintien des joints tournants 1, 1' et 1".

Le système de transfert 12 selon l'invention ne saurait se limiter aux modules décrits. Tout module pertinent pour le transfert d'un fluide comportant un joint tournant selon l'invention dont le réservoir est immergé dans les eaux marines pourrait être envisagé.

Les systèmes de transfert 12 sont généralement introduits dans des systèmes d'amarrage rotatif en mer, comme par exemple, non limitativement, au sein d'une unité flottante de production, de stockage et de déchargement (également connue sous l'appellation anglo-saxonne « *Floating production storage and offloading* »). Lesdites unités se présentent généralement sous la forme d'un navire coopérant avec une plateforme de forage et au moins un système de transfert de fluide, ledit système pouvant être inclus au sein d'une tourelle d'amarrage, système pivotant permettant au navire de s'orienter librement de façon à offrir une moindre résistance aux courants marins. Avantageusement, l'unité flottante comporte un système de transfert de fluide conforme à l'invention.

D'autres modifications peuvent être envisagées sans sortir du cadre de la présente invention défini par les revendications ci-annexées.

## Revendications

1. Joint tournant (1) pour transférer un premier fluide (F₁) comprenant :
- un membre mâle (2) et un membre femelle (3) montés mobiles l'un par rapport à l'autre ;
- un roulement mécanique (6) pour maintenir les membres mâle (2) et femelle (3) concentriques ;
- un joint d'étanchéité annulaire (4a) ;
- le membre femelle (3) étant un élément sensiblement cylindrique creux dont la paroi interne comporte un premier évidement (7a) annulaire débouchant sur toute la circonférence de la paroi interne dudit membre femelle (3), ledit premier évidement (7a) étant agencé pour accueillir le joint d'étanchéité (4a) ;
- ledit joint d'étanchéité (4a), après son montage dans le premier évidement (7a), présentant une surface de contact supérieure (10a) et une surface de contact inférieure (9a) avec ledit premier évidement (7a), lesdites surfaces de contact étant sensiblement normales à l'axe de révolution du joint tournant (1) et coopérant uniquement avec le premier évidement (7a) ;
- un deuxième évidement coaxial (7b) et contenu dans un plan sensiblement parallèle et non confondu avec celui du premier évidement (7a),
- lesdites membres mâle (2) et femelle (3) étant agencés mutuellement pour matérialiser une chambre toroïdale (5) dans laquelle transite le premier fluide à une pression P₁, ledit premier évidement (7a) étant positionné entre la chambre toroïdale (5) et le deuxième évidement (7b) ;
- des moyens pour acheminer un deuxième fluide (F₂) sous pression, à une pression P₂ supérieure de celle P₁ du premier fluide transféré, audit premier évidement (7a) ;
ledit joint tournant étant **caractérisé en ce qu'**il comporte :
- des moyens pour acheminer un troisième fluide (F₃) sous pression à une pression P₃ au deuxième évidement (7b) ;
- un conduit radial additionnel (11i) placé entre les premier (7a) et deuxième (7b) évidements débouchant dans la paroi interne de la membre femelle (3) pour acheminer un quatrième fluide (Fᵢ) à une pression Pᵢ, telle que la pression P₂ du deuxième fluide (F₂) est égale à la pression P₁ de la chambre (5) augmentée d'un différentiel de pression déterminé strictement positif et la pression P₃ du troisième fluide (F₂) est égale à la pression Pᵢ du quatrième fluide (Fᵢ) augmentée du même différentiel de pression déterminé strictement positif.

2. Joint tournant (1) selon la revendication 1, pour lequel les moyens pour acheminer le deuxième fluide (F₂) consistent en un ou plusieurs conduits (11a) radiaux dans le membre femelle (3) débouchant dans le premier évidement (7a).

3. Joint tournant (1) selon l'une quelconque des revendications précédentes, pour lequel le joint d'étanchéité (4a, 4b, 4c) est torique.

4. Joint tournant (1) selon les revendications 1 ou 2, pour lequel le joint d'étanchéité (4a, 4b, 4c) présente une section en U et comporte deux lèvres flexibles inférieure et supérieure coopérant avec un talon, lesdites lèvres inférieure et supérieure du joint étant saillantes dans un plan normal à l'axe de révolution dudit joint d'étanchéité et constituant les surfaces de contact inférieure (9a, 9b, 9c) et supérieure (10a, 10b, 10c) du joint d'étanchéité.

5. Joint tournant (1) selon l'une quelconque des revendications précédentes, pour lequel la profondeur du premier évidement (7a) est supérieure ou égale à la distance définie entre le diamètre interne et le diamètre externe du joint d'étanchéité (4a, 4b, 4c).

6. Joint tournant (1) selon l'une quelconque des revendications précédentes, pour lequel les moyens pour acheminer le troisième fluide (F₃) consistent en un ou plusieurs conduits radiaux (11b) dans le membre femelle (3) débouchant dans le deuxième évidement (7b).

7. Joint tournant selon l'une quelconque des revendications précédentes, pour lequel le roulement mécanique (6) est un roulement à rouleaux croisés.

8. Système de transfert de fluide (12), comportant un ou plusieurs joints tournants (1,1',1"), selon l'une quelconque des revendications précédentes.

## Patentansprüche

1. Drehgelenk (1) zum Übertragen eines ersten Fluids (F₁), welches umfasst:
- ein männliches Element (2) und ein weibliches Element (3), die relativ zueinander beweglich montiert sind;
- ein mechanisches Lager (6), um das männliche Element (2) und das weibliche Element (3) konzentrisch zu halten;
- eine Ringdichtung (4a);
- wobei das weibliche Element (3) ein im Wesentlichen hohlzylindrisches Element ist, dessen Innenwand eine erste ringförmige Aussparung (7a) umfasst, die auf den gesamten Umfang der Innenwand des weiblichen Elements (3) mündet, wobei die erste Aussparung (7a) angeordnet ist, um die Ringdichtung (4a) aufzunehmen;
- wobei die Ringdichtung (4a) nach ihrer Montage in der ersten Aussparung (7a) eine obere Kontaktfläche (10a) und eine untere Kontaktfläche (9a) mit der ersten Aussparung (7a) aufweist, wobei die Kontaktflächen im Wesentlichen normal zur Drehachse des Drehgelenks (1) sind und einzig mit der ersten Aussparung (7a) zusammenwirken;
- eine zweite und auf einer im Wesentlichen parallelen Ebene untergebrachten und nicht mit der Ebene der ersten Aussparung (7a) verwechselte koaxiale Aussparung (7b),
- wobei die männlichen Elemente (2) und weiblichen (3) Elemente wechselseitig angeordnet sind, um eine torusförmige Kammer (5) darzustellen, in die das erste Fluid mit einem Druck P₁ passiert, wobei die erste Aussparung (7a) zwischen der torusförmigen Kammer (5) und der zweiten Aussparung (7b) positioniert ist;
- Mittel, um ein zweites Fluid (F₂) unter Druck bei einem über dem Druck P₁ des ersten übertragenen Fluids liegenden Druck P₂ an die erste Aussparung (7a) zu befördern;
wobei das Drehgelenk **dadurch gekennzeichnet ist, dass** es Folgendes umfasst:
- Mittel zum Befördern eines dritten Fluids (F₃) unter Druck bei einem Druck P₃ an die zweite Aussparung (7b);
- einen zusätzlichen radialen Kanal (11i), der sich zwischen der ersten (7a) und zweiten (7b) Aussparung befindet, die in die Innenwand des weiblichen Elements (3) mündet, um ein viertes Fluid (Fᵢ) bei einem Druck Pᵢ zu befördern, sodass der Druck P₂ des zweiten Fluids (F₂) gleich dem Druck P₁ der Kammer (5) ist, der um einen rein positiv ermittelten Differenzdruck erhöht ist, und der Druck P₃ des dritten Fluids (F₂) gleich dem Druck Pᵢ des vierten Fluids (Fᵢ) ist, der um den gleichen rein positiv ermittelten Differenzdruck erhöht ist.

2. Drehgelenk (1) gemäß Anspruch 1, wobei die Mittel zum Befördern des zweiten Fluids (F₂) aus einem oder mehreren radialen Kanälen (11a) in dem weiblichen Element (3), das in die erste Aussparung (7a) mündet, bestehen.

3. Drehgelenk (1) nach einem der vorhergehenden Ansprüche, wobei die Ringdichtung (4a, 4b, 4c) torusförmig ist.

4. Drehgelenk (1) nach den Ansprüchen 1 oder 2, wobei die Ringdichtung (4a, 4b, 4c) einen U-förmigen Abschnitt aufweist und jeweils eine flexible Lippe unten und oben umfasst, die mit einer Nase zusammenwirken, wobei die untere und obere Lippe des Gelenks an der Drehachse der Ringdichtung in eine normale Ebene hineinragen und die unteren (9a, 9b, 9c) und oberen (10a, 10b, 10c) Kontaktflächen der Ringdichtung bilden.

5. Drehgelenk (1) nach einem der vorhergehenden Ansprüche, wobei die Tiefe der ersten Aussparung (7a) größer als oder gleich der Distanz ist, die zwischen dem Innendurchmesser und dem Außendurchmesser der Ringdichtung (4a, 4b, 4c) definiert ist.

6. Drehgelenk (1) nach einem der vorhergehenden Ansprüche, wobei die Mittel zum Befördern des dritten Fluids (F₃) aus einem oder mehreren radialen Kanälen (11b) in dem weiblichen Element (3) bestehen, die in die zweite Aussparung (7b) münden.

7. Drehgelenk nach einem der vorhergehenden Ansprüche, wobei das mechanische Lager (6) ein Kreuzrollenlager ist.

8. System zum Übertragen von Fluid (12), welches ein oder mehrere Drehgelenke (1, 1', 1 ") nach einem der vorhergehenden Ansprüche umfasst.

## Claims

1. Rotating joint (1) for transferring a first fluid (F₁), comprising:
- a male member (2) and a female member (3) mounted so they can be moved in relation to one another;
- a mechanical bearing (6) to keep the male (2) and female (3) members concentric;
- a sealing ring (4a);
- the female member (3) being a substantially cylindrical hollow element whose inner wall has a first annular recess (7a) opening around the entire circumference of the inner wall of said female member (3), said first recess (7a) being arranged to receive the seal (4a);
- said seal (4a), after being fitted in the first recess (7a), having an upper contact surface (10a) and a lower contact surface (9a) with said first recess (7a), said contact surfaces being substantially normal to the axis of revolution of the rotating joint (1) and cooperating solely with the first recess (7a);
- a second recess (7b) coaxial and contained in a plane substantially parallel to and not combined with that of the first recess (7a);
- said male (2) and female (3) members being reciprocally arranged to embody a toroidal chamber (5) through which the first fluid flows at a pressure P₁, said first recess (7a) being positioned between the toroidal chamber (5) and the second recess (7b);
- means for conveying a second pressurised fluid (F₂), at a pressure P₂ higher than that P₁ of the first transferred fluid, to said first recess (7a);
said rotating joint being **characterised in that** it comprises:
- means for conveying a third pressurised fluid (F₃) at a pressure P₃ to the second recess (7b);
- an additional radial conduit (11i) located between the first (7a) and second (7b) recesses opening into the inner wall of the female member (3) for supplying a fourth fluid (Fᵢ) at a pressure Pᵢ, such that the pressure P₂ of the second fluid (F₂) is equal to the pressure P₁ of the chamber (5) increased by a strictly positive set pressure differential and the pressure P₃ of the third fluid (F₃) is equal to the pressure Pᵢ of the fourth fluid (Fᵢ) increased by the same strictly positive set pressure differential.

2. Rotating joint (1) according to claim 1, wherein the means for conveying the second fluid (F₂) consist in one or more radial conduits (11a) in the female member (3) opening into the first recess (7a).

3. Rotating joint (1) according to any of the preceding claims, wherein the seal (4a, 4b, 4c) is toric.

4. Rotating joint (1) according to claims 1 or 2, wherein the seal (4a, 4b, 4c) has a U-shaped section and comprises two flexible lips, one lower and one upper, cooperating with a heel, with said lower and upper lips of the seal protruding in a plane normal to the axis of revolution of said seal and constituting the lower (9a, 9b, 9c) and upper (10a, 10b, 10c) contact surfaces of the seal.

5. Rotating joint (1) according to any of the preceding claims, wherein the depth of the first recess (7a) is not less than the distance defined between the inner diameter and the outer diameter of the seal (4a, 4b, 4c).

6. Rotating joint (1) according to any of the preceding claims, wherein the means for conveying the third fluid (F₃) consist in one or more radial conduits (11b) in the female member (3) opening into the second recess (7b).

7. Rotating joint according to any of the preceding claims, wherein the mechanical bearing (6) is a crossed roller bearing.

8. Fluid transfer system (12) comprising one or more rotating joints (1,1',1"), according to any of the preceding claims.
